# EUROPEAN PATENT APPLICATION

(11) **EP 1 624 686 A1**
(43) Date of publication of application: **08.02.2006**
(21) Application number: 05076454.7
(22) Date of filing: 16.06.2005
(51) Int. Cl.: H04N 7/15

(54) **Working method and layout for the carrying into effect of a video conference**

(30) Priority: 18.06.2004 NL 1026449
(71) Applicant: Page-Jones, Christopher Andrew, 4811 HC Breda (NL)
(72) Inventor: Page-Jones, Christopher Andrew, 4811 HC Breda (NL)

(57) **Abstract**

The invention in question relates to a working method for the carrying into effect of a video conference between at least a first and a second party, whereby the working method comprises the steps of dispatching the instructions of the in the first- party computer fed instructions to the server, the selection by the server on basis of the instructions of a second party from the aforementioned list, the bringing about by the server of a communication link between the first-party computer and the server and between the server and the selected second-party computer, the bringing about via a further network of a separate communication link between the first-party computer and the selected- second party computer, the registration with the video camera of the first/second-party computer of the image of the first/ second party, and the representation thereof on the monitor in question.

## Description

The said invention relates to a working method and layout for the carrying into effect of a video conference between at least a first party and a second party.

For organisations in general and companies in particular it is of great importance to gain and keep a good contact with third parties, such as customers, suppliers or advisors, or with persons within the organisation itself. From the point of view of communication, in most cases personal contact is preferred, as communication between people is not only verbal, but also to a large extent, nonverbal. However, from an organisational point of view, it is often undesirable to get various parties together in a certain place. Moreover, the costs to maintain contact in this way are usually too high to make such contacts profitable.

For mantaining contacts one can also make use of the telephone, possibly in combination with the fax, to exchange information from time to time with the third party. As mentioned above, the drawback hereof is that the various parties can hear each other, but not see each other. To meet this objection, video conference systems are known whereby through means of a communication channel not only audio information, but also video information can be mutually exchanged. The parties can see each other during the meeting on a monitor. However such video conference systems are relatively expensive, consequently most organisations do not have such systems at their disposal.

A further drawback of already existing video conference systems is that the parties see fixed images of each other, for example an image of the head or the torso of the speakers. More visual information than the image of the face or the torso of the speaker is therefore unavailable to the person on the other side of the communication channel. When for example a meeting is being held on a specific product, as portrayed in a brochure, the image of this product remains out of sight for at least one of the parties.

It is the aim of the said invention to provide a working method and layout for communication between at least a first and second party, in which the aforementioned drawbacks are met, and where, in a quick and efficient manner not only the video information with the respective images of the first party and the second party are available, but at the same time supplementary information is available, by which the communication can be further improved.

According to a first aspect of the said invention a working method is therefore provided for the carrying into effect of a video conference between at least a first and a second party in a system with at least a first- party computer fitted with at least a monitor, speaker, video camera, and a microphone, a first network between the first-party computer and the central server, a second network between the second- party computer, and the central server, a third network between the first-party computer and the second- party computer, and a central server, in which is stored a list of first parties with the associated second parties, a first-party database with previously stored for the first party representative first-party information and a second party database with previously stored for the second party representative second party information, the working method comprising the following steps:
a) The dispatching of the in the first- party computer stored instructions to the server;
b) The selection by the server on basis of the instructions of a second party from the list mentioned:
c) The bringing about by the server of a first communication link via the first network between the first-party computer and the server and via the second network between the server and the selected second-party computer;
d) The bringing about via the third network of a separate second communication link between the first-party computer and the selected second-party computer;
e) The registering with the video camera of the first-party computer of the image of the first party and the transposition of the registered image in video conference details;
f) The registration with the video camera of the second-party computer of the image of the second party and the transposition of the registered image in video conference details;
g) The dispatching via the first communication link of on the server stored second party information and first party information to the first-party computer and second-party computer and the representing thereof on the monitor in question;
h) The dispatching via the second communication link of video conference details of the first-party computer to the second-party computer and of the second-party computer to the first-party computer and the representing thereof on the monitor in question.

Besides the mutual exchange of images of the first party and the second party there is also available second-party information and first-party information on the first-party computer and the second-party computer respectively. By party details can among other things be understood (not limitative) the NAW details of the party in question, a calendar with a summary of appointments, company information, information about new and old products offered by the party in question, brochures, order firms, conditions of supply, supply data, sales information, pricelists, bills etc. This makes it possible for a first and second party whilst talking to each other and looking at each other, to discuss a wide range of commercial activities, whereby at the same time relevant commercial or technical information is being made available.

The exchange of these data always takes place via the central server who maintains control of the contents of the information in respective databases. As far as this aspect is concerned there is no direct communication possible between parties. However, a direct communication link is brought about between the parties for dispatching the video conference information as a result of which both parties can see each other. By providing a direct link between both parties, optimal use can be made of the often limited transmission capacity of the available networks.

It is noted that details transmitted via the server can include static images, such as photographs, drawings, and documents, moving images (films), files (of arbitrary types).

Step e of the working method comprises preferably the registering with the help of the microphone of the first-party computer of the sound produced by the client and the transposition of the registered sound in audio conference details and step h comprises also the dispatching of audio conference details and the playing thereof by the second-party computer. This means that besides the visual information, also audio information can be sent from the first to the second party. Preferably there is also a matter of communication in the opposite direction, i.e. that the sound produced by the second party is being transposed and sent to the client. In this version the second party and the computer do therefore not need to have telephone contact with each other, but all communication can take place via the same communication channel as the channel via which the video conference details are already being sent. This can mean a substantial reduction of costs.

Because the working method provides the possibility to communicate verbally and non-verbally in different ways the need to reach each other physically, diminishes considerably. The consequence of this is that one needs to travel less to exchange information, which does not only save much time and expense, but also reduces the burdon on the environment.

Preferably the working method also comprises the essentially simultaneous bringing about of steps g and h, that is to say the simultaneous execution of the dispatching via the first communication link of the on the server stored second party information and client information to the first-party computer, respectively second-party computer and the representation thereof on the monitor of the first-party computer and second-party computer respectively and the simultaneous dispatching via the second communication link of the video conference details and, as in the aforementioned method, also of the audio conference details, of the first-party computer to the second-party computer and of the second-party computer to the first-party computer and the representation thereof on the respective monitor (of the playing on the respective speaker). Because the various flows of detail are being sent simultaneously or as good as simultaneously, communication between the client and the second party can take place without delay or as good as without delay (real time).

Step i of the working method comprises preferably the representation of first and second party-information on an initial part of the monitor in question and step j comprises the representation of video- and/or audio conference details on an other part of the monitor in question. If for example the left half of the monitor is intended for video/audio communication, whilst the right half is intended to portray the remaining information, such as documents, brochures, offers, etc, both parties for example can discuss an offer, whereby the right hand side shows the image of the offer, whereby one can see each other on the left hand side. When for example the second party wishes to change his offer, he sends the related instructions to the server. The server then adapts the second party details and the changed second party details are sent to the first party and to the second party so that the changed offer is being shown on the first and second party monitors respectively. In this way it is possible to communicate quickly and efficiently, just as if the client and the second party where physically facing each other.

Preferably the first, second and third network are part of the internet. When for example the first and second are connected via a standard ADSL (asymmetric digital subscriber line) telephone line with an arbitrary internet server, any communication can take place between a party and the server of the system in question and direct communication between the parties via the internet. Taking into consideration the broad availability of internet all over the world this makes communication simple. All one needs is access to internet to make the video conference according to the invention in question possible.

When also the third network is part of the internet, step d of the aforementioned working method can preferably comprise:
- the selection by the server of an IP-address of the first-party computer and an IP-address from the second-party computer;
- the dispatching from the server via the first network of IP-address information from the second-party computer to the first- party computer;
- the dispatching from the server via the second network of IP-address information from the first- party computer to the second-party computer;
- the bringing about by the client-and second-party computer on basis of the IP-addresses received via the internet of the second communication link.

Thus a direct communication over the internet between both IP addresses becomes possible, so that the dispatching and receiving of the video and possibly audio conference details can take place very efficiently and quickly. After having passed the IP addresses the server has no longer control or practically no control on the exchange of a video-and/or audio conference details between the two addresses. The first- and second - party details however remain guarded by the server, so that the authenticity of these details remains safeguarded. When one of the parties indicates that he wishes to end the session, the server can terminate the communication between the two IP addresses (How is this possible? Extra information required).

In a particularly economical set up the steps of the working method are installed by turning a webbrowser (for example Internet Explorer) on the party computers, whilst a webpage generator is turning on the server. Because of this on the web based solution no special programmes need to be installed on the party computers, as use is made of the web browser already present on the, in most cases, standard computers.

According to another aspect of the invention, the invention comprises a communication system for video conference between at least a first and a second party, comprising:
- a first-party computer provided with at least a monitor, a video camera to register the image of the first party and the transposition of the registered image in video conference details, and means of input, especially a keyboard, for the input of instructions;
- a second- party computer provided with at least a monitor, a video camera to register the image of the second party in question and to transpose the registered image into video conference details, and means of input, especially a keyboard for the input of instructions;
- a central server, on which is stored a list of first parties with the associated second parties, a first party database with previously for the first party representative first party information stored and a second party database with previously for the second party representative second party information stored;
- the first network between the first-party computer and the central server;
- the second network between the second-party computer and the central server;
- a third network between the first-party computer and the second-party computer;
   whereby the system is installed for:

- the receiving of instructions by the server from the first-party computer;
- the selection by the server on basis of the instructions, of a second party from the aforementioned list;
- the bringing about by the server via the first network of a first communication link between the first-party computer and the server and via the second network between the server and the selected second- party computer;
- the bringing about via the third network of a seperate second communication link between the first-party computer and the selected second- party computer;
- the dispatching via the first communication link of on the server stored second party information and first party information to the first-party computer and second-party computer and the representation thereof on the monitor in question;
- the dispatching via the second communication link of video conference details from the first-party computer to the second-party computer and from the second-party computer tot the first-party computer and the representation thereof on the monitor in question.

The invention also relates to a data carrier on which is stored a computer programme product, which when being turned by one or more processors of the system the aforementioned working method is provided.

The invention also relates to a computer programme for the execution of the steps of the herein described working method, when the programme is being turned on one or more computers.

Further details, attributes and characteristics of the invention in question are being made clear on the basis of the following description of a preferred form of execution thereof. In the description reference is made to the figures which show:
Figure 1, a diagram of a preferred form of execution of the invention;
Figure 2, a first example of a session window; and
Figure 3, shows a second example of a session window.

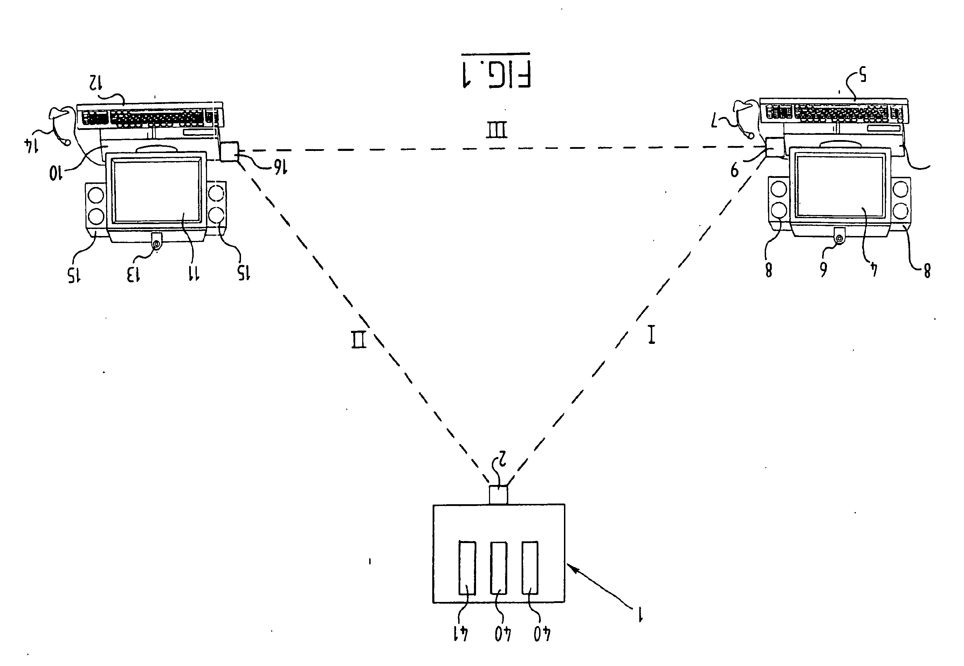

Figure 1 shows the configuration of a preferred form of execution of the invention. Shown is a central server 1, which in the familiar way is connected via an interface 2 with the network, in this case the internet 1. The server has been provided with software with which the video conference can be brought about, as is shown in the following. In the server has also been installed a HTML- document renderer, with which HTML or suchlike documents can be created and dispatched. The server also contains a storage medium, in which a large number of relevant details is stored, preferably in one or more databases. Among other things, said details encompass lists which provide a survey of clients already registered and the with every client associated list of customers, previously entered details, which are representative for the individual clients and similar details which are representative for the individual customers.

The previously mentioned interface 2 of server 1 can consist of a standard ADSL modem with which contact is made with an (unmentioned) internetserver via a telephone line. However, other communications with the internet are also conceivable and are all within reach of the expert.

A second part of the system contains a computer 3 of a first party, such as for example a client, which computer is linked via an interface 9 to the internet in the usual manner. Computer 3 consists of at least a monitor 4 , a keyboard 5, one or more cameras 6, one or more microphones 7 and one or more speakers 8. On computer 3 a webbrowser has been installed, with which the HTML-documents generated by the server can be read.

A third part of the system consists of a further computer 10 of a second party, such as for example a customer, which again is linked with the help of an interface 11 to the internet 1 in the usual manner. This computer 10 also consists of a monitor 11, a keyboard 12, one or more cameras 13, one or more microphones 14 and one or more speakers 15. On this computer 10 a webbrowser has also been installed.

It will be clear that in practise the system will comprise a large number of client computers 3 and customer computers 11. In certain renderings it will also be possible to provide for two or more servers. However, the way in which such extensive systems operate is, except where specifically indicated, the same as that of the herein described simple system. A further description of the more extensive systems will therefore be omitted.

When the two parties, which hereafter shall be called the client and the customer, wish to carry out a video discussion, they will make use of the software installed on the server 1 in the shape of the so-called Account Manager. In the installation thus rendered, this software comprises a HTML-page generator with ActiveX-control to reproduce HTML documents on monitor 4 of the client or monitor 11 of the customer. Initially the HTML document shows an input monitor via which the client and the customer can gain access to the server. In the input monitor the customer and the client enter a user's name and a password to enable them to log on to the system. The user's name and the password of the client as well as the customer will be forwarded to the server. The server checks in a previously on the server stored storage medium (for example a hard disk) the user's names and passwords and logs the parties on, if the passwords and user's names correspond with the information stored on the server.

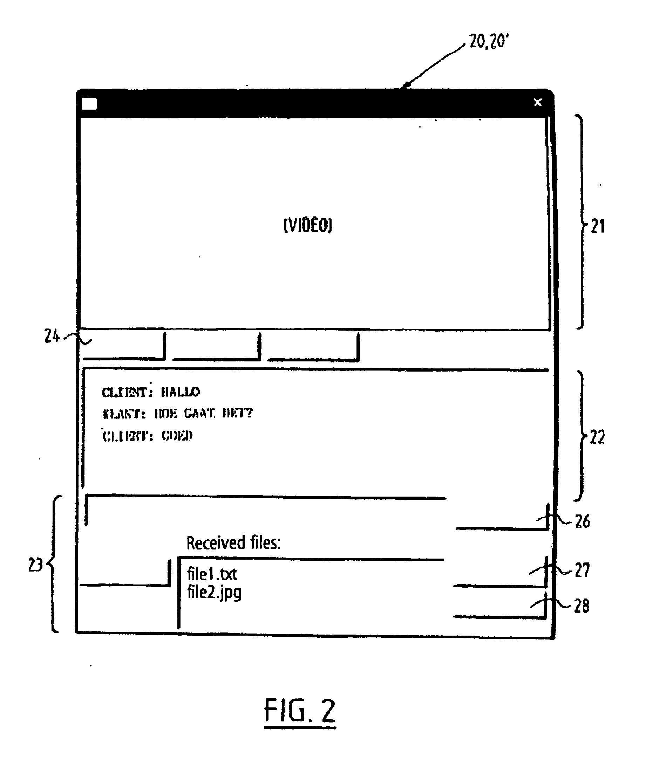

Next the server 1 generates a further HTML document, on which can be seen that the client and the customer are indeed logged on and sends this document to the client and the customer respectively. The computer 3,10 of the client and the customer renders this document in the usual way in a window on the monitor in question. This window is called the session window. An example of a session window is rendered in figure 2. The window 20,20' (shown on the respective monitors 3 and 11) consists mainly of three parts, an input- video window 21, a chat window 22 and a file-transfer window 23. The input-video window 21 contains a button with which the client and the customer are able to intimate that they wish to have a video conference with each other. By using the button 24 the client- and customer computer 3, 10 send a message to the server 1. The server 1 then brings about a video link between the two computers 3, 10. The video images are shown in the window part 21 of the session window 21.

The video link is brought about as follows. Once the session has started and the starting button 24 for the video image has been activated, the server 1 sends the IP address of the customer computer 10 and of the client computer 3 to the client computer 3 and the customer computer 10 respectively, so that both computers are able to make a direct communication link via the internet 1. That is to say that the communication will take place direct between the client computer 3 and the customer computer 10. Via this communication link the video details and possible audio details are being sent. For this purpose the camera 6 of the client computer registers the client's image, such as his or her head or torso. The registered image is being converted in the for that purpose suitable signals and via the direct link between the client computer 3 and the customer computer 10 is sent and reproduced on the incoming video window 21' of the client. In the same way the camera 13 registers the client's image and converts the image in the for that purpose suitable signals and sends these signals via the direct link between the customer computer 10 and the client computer 3 in order to reproduce the image on the incoming video window 21 of the monitor 4 of the client computer 3. In this way the client and the customer can see each other permanently.

In the manner thus rendered verbal communication takes place via a chat window 22. With the help of the respective keyboards 5,12 of the client computer 3 and customer computer 10 messages may be sent to and fro in the usual manner, whereby the central server 1 acts as the chat server. The client and customer exchange short text messages, which are being sent to each other with a slight delay.. This form of communication between the client computer 3 and the customer computer 10 always takes place therefore via the server 1.

It is furthermore possible besides the verbal communication in the chat window 22 to exchange more information by sending files to and fro. These files may be of any given type, such as text files, graphical files (photographs and films), sound files, drawing files, etc.

The window 23 of session window 20 for example, shows a list 25 of files received. Reproduced is a first 'fife 1. txt' and a second 'file 2.jpg'. The first file is a text file and may be read by clicking on, whereby automatically a suitable application for reading such a text file is started up, for example a word processor. The second file is a graphical file, which when clicked on is portrayed by means of a graphical programme started up for that purpose. This way it is possible that the client and the customer send each other files, which may be opened during the session, so that both parties will be able to exchange views during the session. The files received may be stored in the usual way by activating a save button 27 or deleted by activating a delete button 28. In the same way a file may be sent from the session window 20 of the client to the session window 20' of the customer by activating a send button 26.

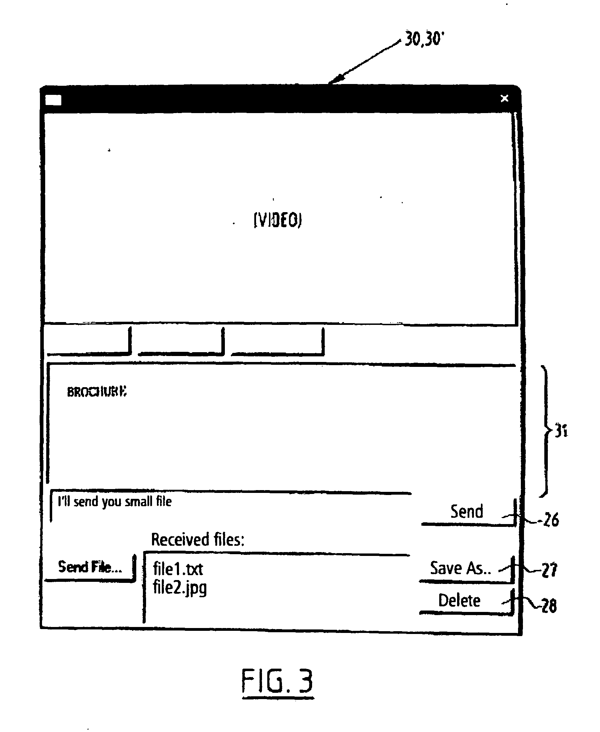

In a different set-up as shown in figure 3, the chat window 22 of the session window 20 (and 20') has been replaced by a monitor 31. The function of the monitor 31 is to portray details of clients or details of customers direct, without first having to start up a separate application on the relative session window 30,30' of the client-and customer computer. For example, on the monitor 30 a bid from the client can be shown, which bid has previously been stored in a for that purpose intended and on server 1 stored customer database 40. The details from the customer database 40 are sent by the server 1 upon request of the customer to the customer computer 10 as well as to the client computer 3, which computers show this information on monitors 11 and 4 respectively. This offers the customer as well as the client the possibility to discuss a bid interactively. When for example the client wishes to see something changed in the bid, the customer will be able to send instructions to the server 1 by means of his means of input 12 in order to adapt the customer database 40 accordingly. When the server 1 has adapted the details of the customer database 27 , he sends the adapted details to the client computer 3 as well as to the customer computer 10, who show the details thus received on a respective monitor 11,4. In the same way the client is able to show client details on his monitor as well as on that of the customer, which client details have been stored on the server 1 in the client database 41.

As previously stated lists 42 are stored on the server 1, for example in the shape of a database, on which clients are linked with matching customers. The system manager of the server 1 manages this list 42 and sees to it that every client on the list 42 can only get in touch with the customers belonging to this particular client. The list 42 also comprises a link between a customer and those clients with which the customer can get in touch. In the master-slave configuration which is intended, the customer will be able to get in touch with only one client, whereas the client in general has the right to get in touch with more than one client. Herewith the client gets more rights than the customer. However, it is also possible to show every customer all the clients which are logged on at that moment.

The rights requested are not limited to the herein described forms of installation of the invention, but are sooner determined by the following conclusions, within the drift of which all kinds of modifications are thinkable.

## Claims

1. Working method for bringing about a video conference between at least one first and one second party in a system with at least one first-party computer provided with at least a monitor, a loudspeaker, a video camera, and a microphone, at least one second-party computer provided with at least a monitor, a loudspeaker, a video camera, and a microphone, one first network (1) between the first-party computer and the central server, a second network (11) between the second-party computer and the central server, a third network (111) between the first-party computer and the second-party computer, and a central server, in which is stored a list of first parties with the associated second parties, a first party database with previously stored - for the first party representative - first-party information and a second party database with previously stored - for the second party representative - second-party information, the working method of which comprising the following steps:
a) the dispatching of the in the first-party computer entered instructions to the server;
b) the selection by the server of a second party from the list mentioned on basis of the instructions;
c) the bringing about by the server of a first communication link via the first network between the first-party computer and the server and via the second network between the server and the selected second-party computer;
d) the bringing about via the third network of a separate second communication link between the first-party computer and the selected second-party computer;
e) the registration of the image of the first party with the video camera of the first-party computer and the transposition of the registered image into video conference details;
f) the registration of the image of the second party with the video camera of the second- party computer and the transposition of the registered image into video conference details;
g) the dispatching via the first communication link of the second party information and first party information stored upon the server to the first-party computer and second-party computer and the representation thereof upon the image srceen in question.
h) the dispatching via the second communication link of video conference details of the first-party computer to the second-party computer and from the second-party computer to the first-party computer and the representation thereof upon the monitor in question.

2. Working method according to conclusion 1, in which step e also comprises the registration with a microphone of the first-party computer of sound produced by the first party and the transposition of the registered sound into audio conference details and step h also comprises the dispatching of audio conference details and playing it through the second-party computer.

3. Working method according to conclusions 1 or 2 in which step f also comprises the registration with the microphone of the second-party computer of sound produced by the second party and the transposition of the registered sound into audio conference details and step h also comprises the dispatching of audio conference details and playing it through the first-party computer.

4. Working method according to one of the foregoing conclusions, mainly comprising the carrying out of steps g and h at the same time.

5. Working method according to one of the foregoing conclusions, in which step i comprises the representation of first- and second party information on an initial part of the monitor in question and step j comprises the representation of video- and/or audio conference details on another part of the monitor in question.

6. Working method according to one of the conclusions 1-5, in which the first and second network are a part of the internet.

7. Working method according to one of the conclusions 1-6, in which the third network is a part of the internet.

8. Working method according to conclusion 7, in which step d comprises:
the selecting by the server of an IP-address of the second-party computer;
the dispatching from the server via the first network of IP-address information of the second-party computer to the first-party computer;
the dispatching from the server via the second network of IP-address information of the first-party computer to the seond-party computer;
the bringing about via the internet of the second communication link received by the first-party- and second-party computer on basis of the IP-addresses.

9. Working method according to one of the foregoing conclusions, comprising:
the dispatching to the server of one on the first-party computer or second-party computer entered instructions;
the adaptation by the server on basis of the instructions received of first party-or second party details in the first party database and the second party database respectively;
the in the main real-time representation on the monitor of the first-party computer as well as on the monitor of the second-party computer of the modified first party- or second party details.

10. Working method according to one of the foregoing conclusions, in which the steps are carried out by turning a web browser on the first party- and second-party computers and a web page generator on the server.

11. Working method according to conclusion 10, whereby the web page a HTML- or a HTML-compliant document is.

12. Communication system for carrying out a video conference, comprising:
a first-party computer provided with at least one monitor, a video camera to register the image of the first party and to transpose the registered image into video conference details, and entering compliances, in particular a keyboard, in order to enter instructions;
a second-party computer, provided with at least one monitor, a video camera to register the image of the second party in question and to transpose the registered image into video conference details, and entering compliances, in particular a keyboard, in order to enter instructions;
a central server, in which is stored a list of first parties with the associated second parties, a first party database with for the first party previously stored representative first party information and a second party database with for the second party previously stored representative second party information;
a first network between the first-party computer and the central server;
a second network between the second-party computer and the central server;
a third network between the first-party computer and the second-party computer; whereby the system has been installed for:
receiving instructions from the first-party computer by the server;
the selection by the server of a second party from the list mentioned on basis of the instructions;
the bringing about by the server of a first communication link via the first network between the first-party computer and the server and via the second network between the server and the selected second-party computer;
the bringing about via the third network of a separate second communication link between the first-party computer and the selected second-party computer;
the dispatching via the first communication link of second party information stored upon the server and first party information to the first-party computer and second-party computer and the representation thereof on the monitor in question;
the dispatching via the second communication link of video conference details of the first-party computer to the second-party computer and from the second-party computer to the first-party computer and the representation thereof on the monitor in question.

13. System according to conclusion 12, in which the first-party computer comprises a microphone to register the sound produced and the transposition of the registered sound into audio conference details, whereby the system has been set up for the dispatching via the second communication link of audio conference details from the first-party computer to the second-party computer and the playing thereof by the second-party computer.

14. System according to conclusion 12 or 13, in which the second-party computer comprises a microphone to register the sound produced by the second party and the transposition of the registered sound into audio conference details, whereby the system has been installed for the dispatching via the second communication link of audio conference details of the second-party computer to the first-party computer and the playing thereof by the first-party computer.

15. System according to one of the conclusions 12-14, in which the system has been set up for simultaneously dispatching over the first as well as the second communication link of second-party- as well as first-party information respectively and the video- and/or audio conference details.

16. System according to one of the conclusions 12-15, whereby an initial part of the monitor in question has been installed to represent the second party- and first party information and another part of the monitor in question has been installed to represent the video- and/or audio conference details.

17. System according to one of the conclusions 12-16, whereby the first and second network are part of the internet.

18. System according to one of the conclusions 12-17, whereby the third network is part of the internet.

19. System according to conclusion 18, in which the server has been installed to select the IP-address of the first-party computer and of the second-party computer, the dispatching via the first network of IP-address information form the second-party computer to the first-party computer, and the dispatching via the second network of IP-address information form the first-party computer to the second-party computer, and in which the first party- and second- party computers have been set up for the installation via the internet of the on basis of the IP-addresses received from the second communication link.

20. System according to one of the conclusions 12-19, whereby the server has been set up to receive an instruction installed via the means of input of the first-party computer or the second-party computer, the adaptation of first party- or second party details in the first party database and the second party database respectively and the mainly real-time portrayal on the monitor of the first-party computer as well as the monitor of the second-party computer of the modified first party- or second party details.

21. System comprising a computer programme product, a server processor, at least one party processor and at least one second party processor, whereby the computer programme product comprises computer instructions for having executed by the processors of the working method according to one of the conclusions 1-11.

22. Datacarrier comprising a computer programme product installed on it on turning which by one or more processors is executed the working method according to one of the conclusions 1-11.

23. Computer programme for the execution when, the programme is being turned on one or more computers of the steps according to one of the conclusions 1-11.
